# EUROPÄISCHE PATENTSCHRIFT

(11) **EP 2 855 071 B1**
(45) Veröffentlichungstag und Bekanntmachung des Hinweises auf die Patenterteilung: **04.10.2023**
(21) Anmeldenummer: 13742625.0
(22) Anmeldetag: 26.07.2013
(51) Int. Cl.: B23K 9/28, B23K 9/29, B23K 9/02, B23K 9/167

(54) **BRENNER FÜR DAS WOLFRAM-INERTGAS-SCHWEIßEN**
TORCH FOR TUNGSTEN INERT GAS WELDING
CHALUMEAU POUR LE SOUDAGE AU TUNGSTÈNE ET AU GAZ INERTE

(30) Priorität: 31.07.2012 DE 102012213453
(43) Veröffentlichungstag der Anmeldung: 08.04.2015
(73) Patentinhaber: Siemens Energy Global GmbH & Co. KG, 81739 München (DE)
(72) Erfinder: HANEBUTH, Henning, 85652 Pliening OT Gelting (DE); WERNER, Christian, 14612 Falkensee (DE)
(86) Internationale Anmeldenummer: PCT/EP2013/065825
(87) Internationale Veröffentlichungsnummer: WO 2014/019958

(56) Entgegenhaltungen:
- EP-A1- 2 008 750
- EP-A1- 2 366 485
- DE-A1- 2 732 756
- DE-A1-102009 008 250
- JP-A- 2000 024 780

## Beschreibung

Die Erfindung betrifft einen Brenner für das Wolfram-Inertgas-Schweißen. Insbesondere betrifft die Erfindung einen Engspaltkopf für das Wolfram-Inertgas-Engspaltschweißen.

Bei Wolfram-Inertgas-Schweißbrennern brennt ein Lichtbogen zwischen einer sich nicht verbrauchenden Wolfram-Elektrode und einem Werkstück. Die Elektrode ist üblicherweise als Kathode geschaltet. Da die Emission von Elektronen als freie Ladungsträger im Wesentlichen durch hohe Temperaturen erreicht wird, ist es gewünscht, in der Elektrode hohe Leistungsdichten zu erzielen. Dies kann durch eine konische kegelförmige Gestalt der Wolfram-Elektrode erreicht werden. Außerdem ist es gewünscht, dass der Ausgangspunkt des Lichtbogens so nah wie möglich in Richtung des Werkstückes liegt, was durch die konische Gestalt der Elektrodenspitze unterstützt wird. Für die an der Elektrode auftretenden hohen Temperaturen ist eine Kühlung erforderlich, um deren Verschleiß zu verhindern bzw. zumindest zu begrenzen.

Üblicherweise wird ein inertes Gas durch den Brenner in Richtung auf das Werkstück geführt. Hierfür ist eine Inertgasdüse vorhanden. Durch diese kann das Inertgas als geschlossener Schleier um den Lichtbogen ausgebildet werden. Die Inertgasdüse umschließt dabei die Elektrode und ist benachbart zu dieser angeordnet.

Aus der DE 10 2009 008 250 A1, die die Grundlage für den Oberbegriff des Anspruchs 1 darstellt, ist ein Brenner für das Wolfram-Inertgas-Schweißen bekannt, bei dem in einem Gehäuse aus einem Metall eine Elektrodeneinheit mittels eines Elektrodenhalters gehalten wird. Zur Kühlung der Elektrodeneinheit ist eine Kühleinrichtung vorhanden, durch die flüssiges Kühlmedium in den Elektrodenhalter hinein- und aus dem Elektrodenhalter wieder herausführbar ist. Hierzu ist in dem Elektrodenhalter ein Hohlraum ausgebildet, in dem über ein Kühlrohr das Kühlmittel hinein- und wieder aus diesem Hohlraum abgeführt werden kann. Das Kühlmittel kann nach dem Austritt aus dem Kühlrohr unmittelbar auf die Stirnfläche der Elektrodeneinheit auftreffen. Hierdurch wird eine direkte Kühlung der Elektrodeneinheit erzielt.

Die EP 2 008 750 A1 und die EP 2 366 485 A1 offenbaren einen Wolfram-Inert-Schweißbrenner, bei dem in einem Elektrodenhalter ein Hohlraum ausgebildet ist, in dem über ein Kühlrohr das Kühlmittel hinein- und wieder aus diesem Hohlraum abgeführt werden kann. Das Kühlmittel kann nach dem Austritt aus dem Kühlrohr unmittelbar auf die Stirnfläche der Elektrodeneinheit auftreffen. Das Kühlrohr ist über einen Innendeckelverschluss mechanisch mit dem Elektrodenhalter verbunden.

Die DE 27 32 756 A1 offenbart einen Schweißbrenner für das Inertgasschweißen mit einem Haltegriff, der von einer Isolierschicht umgeben ist. Durch den Haltegriff sind Kühlwasserkanäle, ein Inertgaskanal und eine Stromzuführung bis in den Schweißkopf geführt.

Die JP 2000-024 780 A offenbart einen Brennerkörper eines WIG-Schweißbrenners, der auf seiner Außenseite mit einer Isolationsschicht bedeckt ist.

Es ist Aufgabe der Erfindung, einen Brenner für das Wolfram-Inertgas-Schweißen, insbesondere einen Engspaltkopf für das Wolfram-Inertgas-Engspaltschweißen, anzugeben, welcher bei hohen elektrischen Stromstärken und hoher Schweißsicherheit einsetzbar ist.

Diese Aufgabe wird gelöst durch einen Brenner gemäß den Merkmalen des Patentanspruches 1. Vorteilhafte Ausgestaltungen und Weiterbildungen der Erfindung sind in den abhängigen Patentansprüchen wiedergegeben.

Bei einem erfindungsgemäßen Brenner für das Wolfram-Inertgas-Schweißen, insbesondere einem Engspaltkopf für das Wolfram-Inertgas-Engspaltschweißen, ist in einem Gehäuse aus einem Metall eine Elektrodeneinheit mittels eines Elektrodenhalters gehalten und eine Kühleinrichtung zur Kühlung der Elektrodeneinheit vorhanden. Durch die Kühleinrichtung ist flüssiges Kühlmedium in den Elektrodenhalter hinein- und aus dem Elektrodenhalter wieder heraus führbar.

Die Kühleinrichtung umfasst zumindest eine elektrisch leitfähige Trennwand innerhalb eines Mantels des Elektrodenhalters zur Ausbildung von Kühlkanälen. Dabei ist wenigstens die zumindest eine Trennwand, gegebenenfalls auch der Mantel des Elektrodenhalters, elektrisch mit der Elektrodeneinheit verbunden. Gleichzeitig ist eine Außenfläche des Elektrodenhalters mit einer Isolationsschicht zumindest im Bereich des den Elektrodenhalter umgebenden Gehäuses versehen.

Die Stromübertragung kann nicht nur durch den Mantel, wie dies bei herkömmlichen Brennern der Fall ist, sondern zusätzlich über die zur Kühleinrichtung gehörigen Komponenten geführt werden, so dass ein erhöhter effektiver Querschnitt für die Stromtragung bereitgestellt ist. Dadurch können im Vergleich höhere Ströme an die Elektrodeneinheit übertragen werden. Gleichzeitig sind sämtliche Strom führenden Komponenten in Kontakt mit dem Kühlmittel, so dass eine effiziente Wärmeabfuhr durch direkte Kühlung der Elektrodeneinheit erzielt ist.

Die vorgeschlagene Ausgestaltung ermöglicht zudem aufgrund der Isolationsschicht eine Potentialtrennung des Elektrodenhalters von dem Gehäuse. Dadurch wird ein vollständiger Stromfluss durch den Elektrodenhalter erzielt. Die Isolationsschicht ermöglicht nicht nur eine ausschließliche Übertragung des Schweißstromes über den Elektrodenhalter, sondern ermöglicht es auch, den Brenner in solchen Umgebungen einzusetzen, in denen geringe Abstände zwischen dem Gehäuse und einem zu bearbeitenden Werkstück existieren. Dies kann beispielsweise ein sog. Engspalt sein, in dem der Brenner zur Herstellung einer Schweißnaht geführt ist. Dadurch, dass das Gehäuse stromfrei ist, können auch keine Lichtbögen zwischen dem Gehäuse und dem zu bearbeitenden Werkstück im Engspalt entstehen, wodurch die Gefahr einer Zerstörung des Gehäuses bzw. Werkstücks reduziert ist.

In einer zweckmäßigen Ausgestaltung ist der Mantel des Elektrodenhalters durch einen Zylinder aus einem Metall, insbesondere aus Kupfer oder aus Edelstahl oder Legierungen davon, gebildet. Da ein großer Teil des Stromes über die Trennwand der Kühleinrichtung zur Elektrodeneinheit geführt werden kann, ist es nicht erforderlich, dass der Mantel des Elektrodenhalters, der ebenfalls Teil der Kühleinrichtung ist, aus einem bestmöglich leitenden Material, wie z.B. Kupfer, gebildet ist. Stattdessen kann das preiswertere und besser bearbeitbare Material Edelstahl oder eine Legierung davon verwendet werden.

Zur Ausbildung der Kühlkanäle ist es zweckmäßig, wenn der Mantel und die zumindest eine Trennwand des Elektrodenhalters formschlüssig miteinander verbunden sind.

Um eine hohe Stromtragfähigkeit des Brenners bzw. Elektrodenhalters zu ermöglichen, ist die zumindest eine Trennwand vorzugsweise aus Kupfer gebildet. Darüber hinaus kann durch die Anzahl der Trennwände nicht nur die Anzahl der Kanäle zur Führung des Kühlmediums festgelegt werden, sondern auch der für die Stromführung zur Verfügung stehende Querschnitt in geeigneter Weise variiert werden.

In einer weiteren Ausgestaltung geht die zumindest eine Trennwand an einem dem zu bearbeitenden Werkstück zugewandten Ende des Mantels in ein Verschlusselement über, das fluiddicht mit dem Mantel verbunden ist. Die fluiddichte Verbindung kann beispielsweise durch eine Verschweißung hergestellt sein. Ebenso kann das Verschlusselement mit dem Mantel verschraubt oder verpresst sein. Sofern erforderlich, kann zusätzliches Vergussmaterial oder ein Lot eingesetzt werden, um die Dichtigkeit herzustellen.

Es ist weiterhin zweckmäßig, wenn die zumindest eine Trennwand im Bereich des Verschlusselements zumindest eine Ausnehmung aufweist, durch die die Kühlkanäle miteinander verbunden sind, so dass das flüssige Kühlmittel durch zumindest einen Kühlkanal in den Elektrodenhalter hinein und in Richtung des Verschlusselements und durch zumindest einen anderen Kühlkanal von dem Verschlusselement weg und aus dem Elektrodenhalter heraus fließen kann. Im Bereich der Ausnehmung der Trennwand erfolgt eine "Umlenkung" des Kühlmediums.

Die Trennwand kann wahlweise durch einen ebenen Steg oder eine ein- oder mehrgängige Schnecke gebildet sein. Ein ebener Steg weist den Vorteil einer einfachen Herstellbarkeit auf. Der ebene Steg trennt den Mantel beispielsweise in zwei gleich große Hälften, wobei die Umlenkung im Bereich der Ausnehmung(en) im Bereich des Verschlusselements erfolgt. Eine homogenere Kühlung lässt sich durch eine schneckenförmige Trennwand erzielen, da das "kalte" in Richtung des Verschlusselements strömende Kühlmedium durch den spiralförmigen Kühlkanal eine allseitige Kühlung des Elektrodenhalters, insbesondere dessen Mantels, ermöglicht.

Die Isolationsschicht kann wahlweise aus einem hitzebeständigen Kunststoff oder einer Keramik bestehen. Es ist ausreichend, wenn diese eine Dicke von ca. 0,1 bis 0,3 mm aufweist.

Vorzugsweise ist die Elektrodeneinheit mit mindestens zwei Teilen ausgebildet, wobei eine sich konisch in Richtung eines Werkstücks verjüngende Elektrode aus Wolfram oder einer Wolfram-Legierung in einem Elektrodenträger aus einem Metall mit einer thermischen Leitfähigkeit größer als 50 W/mK kraft- und/oder stoffschlüssig und/oder formschlüssig fixiert ist. Stahl weist eine thermische Leitfähigkeit von 52 W/mK, Aluminium weist eine thermische Leitfähigkeit von 270 W/mK auf. Durch die Kraft- und/oder stoffschlüssige Fixierung der Elektrode in dem Elektrodenträger lassen sich geringe Übergangswiderstände realisieren, so dass die Gefahr lokaler Überhitzungen in diesem Bereich gering ist.

Dadurch, dass die Elektrodeneinheit gemäß einer weiteren Ausgestaltung mit dem Elektrodenhalter lösbar verschraubt ist, kann die Elektrodeneinheit je nach Erfordernissen ohne Probleme von dem Elektrodenhalter gelöst und durch eine andere Elektrodeneinheit ersetzt werden. Dies ist beispielsweise dann sinnvoll, wenn eine Elektrode mit anderem Durchmesser oder anderer Gestalt zum Einsatz kommen soll. Ebenso kann ein Austausch der Elektrodeneinheit im Falle eines Verschleißes einfach durch Ausschrauben der Elektrodeneinheit aus dem Elektrodenhalter entfernt und durch Einsetzen einer neuen Elektrodeneinheit erfolgen.

Insbesondere ist hierbei die Elektrodeneinheit direkt mit dem Verschlusselement des Elektrodenhalters lösbar verschraubt. Hierzu weist beispielsweise das Verschlusselement eine Bohrung mit einem Innengewinde auf, in welches ein entsprechender, mit einem Außengewinde versehener Vorsprung des Elektrodenträgers eingeschraubt werden kann. Ebenso kann der Elektrodenträger eine Bohrung mit einem Innengewinde und das Verschlusselement einen Vorsprung mit einem Außengewinde umfassen. Die Schraubverbindung zwischen Verschlusselement und Elektrodeneinheit stellt darüber hinaus eine widerstandsarme Verbindung dar.

Es ist weiterhin zweckmäßig, dass das Gehäuse flach ist, wobei dessen Breite wesentlich kleiner als eine Länge ist, wobei die Länge die Erstreckung des Gehäuses in Richtung einer Schweißbahn ist. Beispielsweise kann das Gehäuse als Flachstück ausgebildet sein. Ein solches Gehäuse wird auch als Schwert bezeichnet. Die Breite eines solchen Schwertes ist in der Regel gerade ausreichend, dass der Elektrodenhalter darin stabil aufgenommen werden kann. Entsprechende Leitungen zur Zuführung des Inertgases werden auf gegenüberliegenden Seiten des Elektrodenhalters in dem Schwert vorgesehen. Das Inertgas wird dabei von zwei gegenüberliegenden Seiten in Richtung der Elektrode ausgeleitet, um einen Schleier um den Lichtbogen zwischen der Elektrode und dem Werkstück auszubilden.

Das Gehäuse weist eine Bohrung zur Aufnahme des Elektrodenhalters auf, wobei der Elektrodenhalter mit einer Spielpassung aufgenommen ist. Hierdurch ist eine leichte Drehbarkeit des Elektrodenhalters in dem Gehäuse möglich, so dass die Elektrode eine Pendelbewegung ausführen kann, wie diese beispielsweise häufig beim Engspaltschweißen zum Einsatz kommt.

Dadurch, dass eine Potentialtrennung zwischen dem Gehäuse und dem Elektrodenhalter aufgrund der auf den Elektrodenhalter aufgebrachten Isolationsschicht gegeben ist, braucht das Gehäuse keine Isolierung, insbesondere keine Außenisolierung, aufzuweisen. Auch bei einem Kontakt des metallischen Gehäuses mit dem Werkstück kann es hier nicht zu einem Verschmelzen zwischen diesen beiden Komponenten gelangen, da das Gehäuse nicht stromführend ist.

Die Erfindung wird nachfolgend näher anhand von Ausführungsbeispielen in der Zeichnung erläutert. Es zeigen:
- Fig. 1: eine geschnittene Darstellung eines Elektrodenhalters für das Wolfram-Inertgas-Schweißen,
- Fig. 2: eine teilgeschnittene Ansicht eines erfindungsgemäßen Brenners in Gestalt eines Engspaltkopfes für das Wolfram-Inertgas-Engspaltschweißen, und
- Fig. 3: eine geschnittene Darstellung einer Elektrodeneinheit.

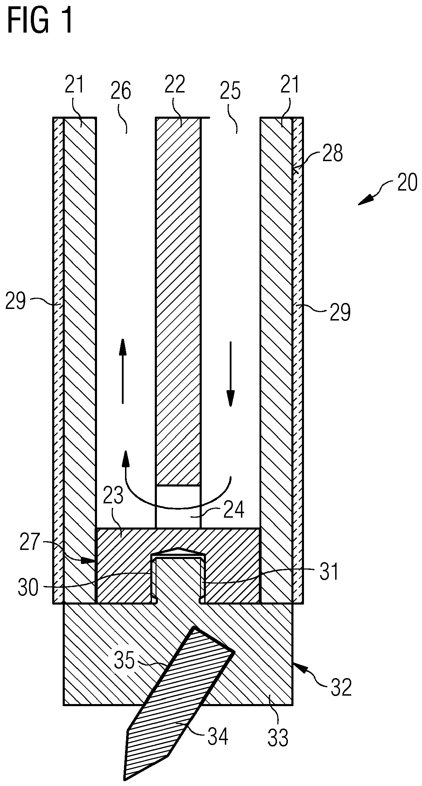

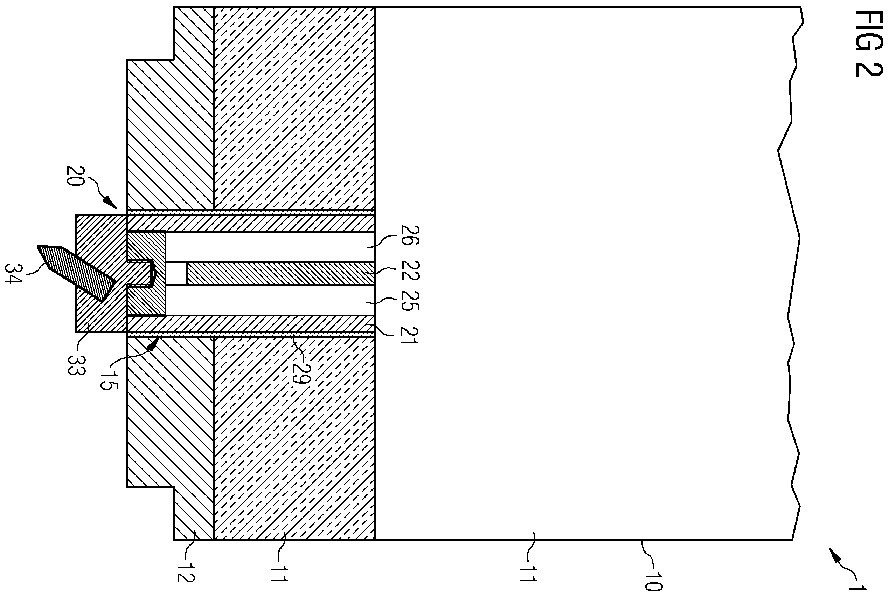

Fig. 1 zeigt in einer Querschnittsdarstellung einen Elektrodenhalter 20 für einen erindungsgemäßen Brenner in Gestalt eines Engspaltkopfs für das Wolfram-Inertgas-Engspaltschweißen. Der als Engspaltkopf ausgebildete Brenner ist in Fig. 2 in einer Teilquerschnittsdarstellung dargestellt.

Der Elektrodenhalter 20 besteht aus einem im Querschnitt zylinderförmigen, hohlen Mantel 21, der wahlweise aus Kupfer oder Edelstahl bestehen kann. Die Verwendung von Edelstahl ermöglicht eine erleichterte und kostengünstigere Fertigung des Mantels 21. Im Inneren des Mantels 21 ist eine stegförmige Trennwand 22, bevorzugt aus Kupfer, angeordnet. Die Trennwand 22 geht an ihrem in der Figur unteren Ende, welches einem nicht dargestellten Werkstück zugewandt ist, in ein Verschlusselement 23 über, welches den Hohlraum des Mantels 21 verschließt. Die Trennwand 22 und das Verschlusselement 23 sind vorzugsweise einstückig ausgebildet.

Zwischen dem Verschlusselement 23 und dem Mantel 21 ist eine fluiddichte Verbindung 27 gebildet. Eine solche fluiddichte Verbindung kann durch eine Verschweißung, eine Verschraubung oder einen Verguss hergestellt sein. Gegebenenfalls kann auch eine Kombination der vorbeschriebenen Maßnahmen erfolgen.

In dem Bereich, in dem die Trennwand 22 an das Verschlusselement 23 angrenzt, weist die Trennwand zumindest eine Ausnehmung 24 auf. Hierdurch können zwischen der Trennwand 22 und dem Mantel 21 gebildete Kühlkanäle 25, 26 miteinander verbunden werden. Beispielsweise kann in den Kühlkanal 25 einströmendes Kühlmittel durch die Ausnehmung 24 hindurch und durch den Kühlkanal 26 wieder aus dem Elektrodenhalter 20 herausfließen. Als Kühlmittel kann beispielsweise Wasser eingesetzt werden.

Mit dem Verschlusselement 23 ist eine Elektrodeneinheit 32 verbunden. Die Elektrodeneinheit 32 besteht aus einem Elektrodenträger 33 sowie einer mit diesem verbundenen Elektrode 34. Der Elektrodenträger besteht beispielsweise aus einer Wolfram-Kupfer-Legierung, z.B. WCu 80/20. Die Elektrode 34 besteht demgegenüber vorzugsweise aus reinem Wolfram oder ist mit seltenen Erden(-elementen) dotiert. Die Elektrode 34 ist hierbei, wie dies aus der Querschnittsdarstellung der Fig. 1 ohne weiteres hervorgeht, gegenüber einer Längsachse des Elektrodenhalters, welches sich in Blattrichtung von oben nach unten erstreckt, in vorgegebenem Winkel geneigt. Die Elektrode 34 ist hierbei in eine entsprechende Bohrung 35 des Elektrodenträgers 33 eingesetzt und mit diesem stoffschlüssig verbunden. Die stoffschlüssige Verbindung zwischen der Elektrode 34 und dem Elektrodenträger 33 kann durch eine Lötung oder ein Einpressen der Elektrode in den Elektrodenträger 33 hergestellt sein.

Die Verbindung zwischen dem Elektrodenträger und dem Verschlusselement 23 erfolgt vorzugsweise durch eine Verschraubung. Hierzu weist das Verschlusselement 23 eine Bohrung 30 mit einem Innengewinde 31 auf, in die ein entsprechender Vorsprung mit einem Außengewinde des Elektrodenträgers 33 eingeschraubt ist. Hierdurch kann beispielsweise der Durchmesser der Elektrode 34 im Rahmen eines Schweißprozesses variiert werden, indem die Elektrodeneinheit durch eine entsprechende andere Elektrodeneinheit mit gewünschter Elektrode ersetzt wird.

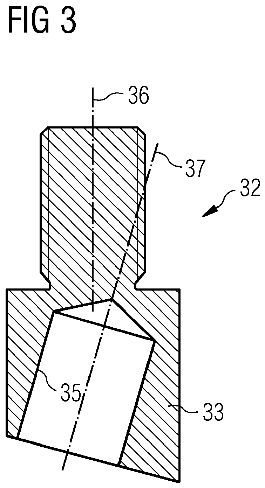

Fig. 3 zeigt in einer vergrößerten Darstellung den Elektrodenträger 33 der Elektrodeneinheit 32 ohne eingesetzte Elektrode. Gut ersichtlich ist hierbei, dass eine Achse 37 der Bohrung 35 zur Aufnahme der Elektrode (hier nicht dargestellt) gegenüber der Längsachse des Elektrodenhalters 20 um einen vorgegebenen Winkel geneigt ist. Ebenso ersichtlich ist ein Vorsprung mit Außengewinde zum Einschrauben in das Verschlusselement 23 der Trennwand 22.

Der Durchmesser des Elektrodenträgers 33 entspricht, wie dies in Fig. 1 zu ersehen ist, maximal dem Außendurchmesser des Mantels 21.

Auf einer Außenfläche 28 des elektrisch leitenden Mantels 21 ist darüber hinaus eine Isolationsschicht 29 aufgebracht. Die Isolationsschicht kann aus einem Kunststoffmaterial oder einer Keramik gebildet sein. Diese wird in einer Dicke von ca. 0,1 bis 0,3 mm auf die Außenseite aufgetragen.

Durch den hohlen Mantel 21 und die darin angeordnete Trennwand 22 mit der Ausnehmung 24 ist durch den Elektrodenhalter 20 eine Kühleinrichtung zur Kühlung der Elektrodeneinheit 32 bereitgestellt. Diese aktive, primäre Kühlung der Elektrode ermöglicht eine Anhebung des Schweißstromes um bis zu 30 %, was sich in einer erhöhten Schweißgeschwindigkeit niederschlagen kann. Darüber hinaus ist ein stark verringerter Verschleiß der Elektrodeneinheit und insbesondere der Elektrode gegeben.

Die primäre, aktive Kühlung der Elektrodeneinheit 32 ist auch deshalb so effizient, da eine direkte Kühlung der den Schweißstrom führenden Komponenten, d.h. der Trennwand, des Verschlusselements 32 und dessen Mantels erfolgt. Durch die Ausgestaltung der geometrischen Abmaße, insbesondere der Wandstärke des Mantels 21 und der Dicke der Trennwand 22 kann der für die Stromführung erforderliche bzw. benötigte Querschnitt in gewünschter Weise beeinflusst werden.

Fig. 2 zeigt den Elektrodenhalter 20 aus Fig. 1 in einem Gehäuse 10. Der Elektrodenhalter 20 ist mit einer Spielpassung in einer Bohrung des Gehäuses 10 angeordnet. Das Gehäuse 10 weist die Gestalt eines Flachstückes auf, wobei in der Darstellung der Fig. 2 die Längserstreckung des Gehäuses 10 ersichtlich ist. Dies bedeutet, das Gehäuse 10 mit dem darin angeordneten Elektrodenhalter 20 wird zur Erzeugung der Schweißbahn in einer Bewegung von links nach rechts, oder umgekehrt, geführt. Dabei wird das Gehäuse 10 in einem Spalt zwischen zwei zu fügenden Werkstücken geführt. Die sich senkrecht zur Blattebene erstreckende Breite des Gehäuses 10 ist wesentlich kleiner als die in Fig. 2 ersichtliche Länge. Die Breite des Gehäuses 10 ist nur wenig kleiner als der Spalt in dem der Brenner 1 während des Schweißvorgangs geführt wird.

Das Gehäuse 10 besteht aus einem Schwert 11 und einem sog. Riegel 12. Schwert 11 und Riegel 12 sind aufgrund der auf der Außenfläche 28 des Elektrodenhalters 20 aufgebrachten Isolationsschicht 29 zu dem Elektrodenhalter 20 potentialgetrennt.

Dies bedeutet, im Gegensatz zu herkömmlichen Engspaltköpfen trägt das Gehäuse 10 nichts zu dem Stromfluss durch die Elektrode 34 bei. Aufgrund dessen kann das Schwert 11 aus preiswertem Messing gebildet werden. Der Riegel 12 besteht aus Kupfer, Messing oder einer Keramik, wie z.B. Siliziumcarbit (SiC) oder Siliziumnitrit (SiN).

In einer dem Fachmann bekannten Weise sind in dem Schwert 11 ebenfalls Kühlleitungen vorhanden. Hierzu sind entsprechende, nicht dargestellte, Bohrungen in das Schwert eingebracht. Ebenso sind weitere Bohrungen zur Inertgaszuführung vorgesehen, welche sich weiterhin durch den Riegel erstrecken, um die Elektrode 34 von gegenüberliegenden Seiten mit dem Inertgas zu umströmen. Da diese dem Fachmann bekannt sind, sind diese ebenfalls nicht dargestellt.

Mit dem Schwert ist darüber hinaus eine nicht dargestellte, dem Fachmann bekannte Anschlusseinheit verbunden, über die dem Elektrodenhalter 20 der für das Schweißen erforderliche Strom zugeführt werden kann. Ebenso weist die Anschlusseinheit Anschlüsse für die Zuführung und Ausleitung des Kühlmediums sowie für die Zuführung des Inertgas auf.

In einer nicht dargestellten Ausführungsvariante kann anstelle der geraden Trennwand 22 auch eine schneckenförmige Trennung der Kühlkanäle 25, 26 vorgesehen sein. Hierzu ist die Trennwand als ein- oder mehrgängige Schnecke ausgebildet. Hierdurch kann eine über den Umfang gleichförmige Kühlung des Mantels 21 des Elektrodenhalters 20 ermöglicht werden.

Der in den Figuren vorgeschlagene Engspaltkopf verfügt somit über eine primäre Kühlung der Elektrode. Der Elektrodenhalter besteht hierbei aus einem Hohlprofil, welches ein elektrisch gut leitendes Innenleben (ebene oder schneckenförmige Trennwand) besitzt, das zusätzlich zum Mantel der Stromübertragung genutzt wird. Ebenso kann eine Stromübertragung gegebenenfalls ausschließlich über die Trennwand erfolgen. Durch die stoffschlüssige Verbindung der Elektroden zum Elektrodenträger ist ein verbesserter Kontakt zur Wärmeableitung der Kühlvorrichtung gegeben. Der Elektrodenträger wird bevorzugt in das Verschlusselement des Elektrodenhalters eingeschraubt und erlaubt dann ein hohes Maß an Wärmeableitung. Darüber hinaus besteht eine hohe Flexibilität bezüglich der zu verwendenden Elektroden.

Durch die auf den Elektrodenhalter aufgebrachte elektrische Isolierung erfolgt die Schweißstromleitung ausschließlich über den Elektrodenhalter. Somit sind das Gehäuse in Gestalt des Schwertes und des Riegels potentialfrei von dem Elektrodenhalter getrennt. Unabhängig von der Kühlung des Elektrodenhalters kann eine Kühlung des Gehäuses, insbesondere des Schwertes, vorgesehen sein.

Die primäre Kühlung der Elektrode führt zu einer Anhebung des Schweißstromes, welcher sich in einer erhöhten Schweißgeschwindigkeit niederschlägt. Weitere Vorteile liegen in einem stark verringerten Verschleiß vom Elektrodenhalter in Verbindung mit dem Schwert sowie reduziertem Verschleiß der Elektrode. In Folge der Potentialtrennung von Schwert und Elektrodenhalter ergeben sich keine Probleme hinsichtlich der Zerstörung des Schwertes bei Berührung des zu bearbeitenden Werkstückes mit dem Schwert. Ein Abschmelzen des Frontriegels kann hierdurch ebenfalls vermieden werden.

Weiterhin können Teilekosten gesenkt werden, da das Schwert, aber auch der Frontriegel, anstelle des bislang verwendeten teuren Wolfram-Kupfers auch aus günstigem Messing hergestellt werden können. Ebenso ist der Einsatz einer Keramik möglich.

Die verbesserte Kühlung der Elektrode führt technologisch zu einer Konzentration des Plasmaansatzpunktes auf der Elektrodenspitze, zu einer Stabilisierung des Plasmas, zu einer verringerten Abdampfrate von Dotierungselementen und damit insgesamt zu einem stabileren Lichtbogen, wodurch das Schweißergebnis verbessert ist.

## Patentansprüche

1. Brenner für das Wolfram-Inertgas-Schweißen, insbesondere Engspaltkopf für das Wolfram-Inertgas-Engspaltschweißen, bei dem in einem Gehäuse (10) aus einem Metall eine Elektrodeneinheit (32) mittels eines Elektrodenhalters (20) gehalten und eine Kühleinrichtung zur Kühlung der Elektrodeneinheit (32) vorhanden ist, durch die flüssiges Kühlmedium in den Elektrodenhalter (20) hinein und aus dem Elektrodenhalter (20) wieder heraus führbar ist,
**dadurch gekennzeichnet, dass**
- die Kühleinrichtung zumindest eine elektrisch leitfähige Trennwand (22) innerhalb eines Mantels (21) des Elektrodenhalters (20) zur Ausbildung von Kühlkanälen (25, 26) umfasst, wobei wenigstens die zumindest eine Trennwand (22) elektrisch mit der Elektrodeneinheit (32) verbunden ist, wobei die Stromübertragung zum Elektrodenhalter (32) entweder ausschließlich über die Trennwand (22) oder über den Mantel (21) und die Trennwand (22) erfolgt, und
- eine Außenfläche (28) des Elektrodenhalters (20) mit einer Isolationsschicht (29) zumindest im Bereich des den Elektrodenhalter (20) umgebenden Gehäuses (10) versehen ist.

2. Brenner nach Anspruch 1, **dadurch gekennzeichnet, dass** der Mantel (21) des Elektrodenhalters (20) durch einen Zylinder aus einem Metall, insbesondere aus Kupfer oder Edelstahl oder Legierungen davon, gebildet ist.

3. Brenner nach Anspruch 1 oder 2, **dadurch gekennzeichnet, dass** der Mantel (21) und die zumindest eine Trennwand (22) des Elektrodenhalters (20) formschlüssig miteinander verbunden sind.

4. Brenner nach einem der vorhergehenden Ansprüche, **dadurch gekennzeichnet, dass** die zumindest eine Trennwand (22) aus Kupfer gebildet ist.

5. Brenner nach einem der vorhergehenden Ansprüche, **dadurch gekennzeichnet, dass** die zumindest eine Trennwand (22) an einem dem Werkstück zugewandten Ende des Mantels (21) in ein Verschlusselement (23) übergeht, das fluiddicht mit dem Mantel (21) verbunden ist.

6. Brenner nach Anspruch 5, **dadurch gekennzeichnet, dass** die zumindest eine Trennwand (22) im Bereich des Verschlusselements (23) zumindest eine Ausnehmung aufweist, durch die die Kühlkanäle (25, 26) miteinander verbunden sind, so dass das flüssige Kühlmittel durch zumindest einen Kühlkanal (25, 26) in den Elektrodenhalter (20) hinein und in Richtung des Verschlusselements (23) und durch zumindest einen anderen Kühlkanal (25, 26) von dem Verschlusselement (23) weg und aus dem Elektrodenhalter (20) heraus fließen kann.

7. Brenner nach einem der vorhergehenden Ansprüche, **dadurch gekennzeichnet, dass** die zumindest eine Trennwand (22) durch einen ebenen Steg oder eine ein- oder mehrgängige Schnecke gebildet ist.

8. Brenner nach einem der vorhergehenden Ansprüche, **dadurch gekennzeichnet, dass** die Isolationsschicht (29) aus einem hitzebeständigen Kunststoff oder einer Keramik besteht.

9. Brenner nach einem der vorhergehenden Ansprüche, **dadurch gekennzeichnet, dass** die Elektrodeneinheit (32) mit mindestens zwei Teilen ausgebildet ist, wobei eine sich konisch in Richtung eines Werkstücks verjüngende Elektrode aus Wolfram oder einer Wolframlegierung in einem Elektrodenträger aus einem Metall mit einer thermischen Leitfähigkeit größer 50 W/mK kraft- und/oder stoffschlüssig und/oder formschlüssig fixiert ist.

10. Brenner nach einem der vorhergehenden Ansprüche, **dadurch gekennzeichnet, dass** die Elektrodeneinheit (32) mit dem Elektrodenhalter (20) lösbar verschraubt ist.

11. Brenner nach einem der vorhergehenden Ansprüche, **dadurch gekennzeichnet, dass** die Elektrodeneinheit (32) direkt mit dem Verschlusselement (23) des Elektrodenhalters (20) lösbar verschraubt ist.

12. Brenner nach einem der vorhergehenden Ansprüche, **dadurch gekennzeichnet, dass** das Gehäuse (10) flach ist, wobei dessen Breite wesentlich kleiner als eine Länge ist, wobei die Länge die Erstreckung des Gehäuses (10) in Richtung einer Schweißbahn ist.

13. Brenner nach einem der vorhergehenden Ansprüche, **dadurch gekennzeichnet, dass** das Gehäuse (10) eine Bohrung aufweist, in welcher der Elektrodenhalter (20) mit einer Spielpassung aufgenommen ist.

14. Brenner nach einem der vorhergehenden Ansprüche, **dadurch gekennzeichnet, dass** das Gehäuse (10) keine Isolierung, insbesondere keine Außenisolierung, umfasst.

## Claims

1. Torch for tungsten inert gas welding, in particular a narrow-gap head for tungsten inert gas narrow-gap welding, in which an electrode unit (32) is held in a housing (10) made of a metal by means of an electrode holder (20) and there is a cooling device for cooling the electrode unit (32), by which liquid cooling medium can be conducted into the electrode holder (20) and out of the electrode holder (20) again,
**characterized in that**
- the cooling device comprises at least one electrically conductive separating wall (22) within a shell (21) of the electrode holder (20) for forming cooling channels (25, 26), at least the at least one separating wall (22) being electrically connected to the electrode unit (32), the current transfer taking place either exclusively via the separating wall (22) or via the shell (21) and the separating wall (22), and
- an outer surface (28) of the electrode holder (20) is provided with an insulating layer (29), at least in the region of the housing (10) surrounding the electrode holder (20).

2. Torch according to Claim 1, **characterized in that** the shell (21) of the electrode holder (20) is formed by a cylinder made of a metal, in particular of copper or high-grade steel or alloys thereof.

3. Torch according to Claim 1 or 2, **characterized in that** the shell (21) and the at least one separating wall (22) of the electrode holder (20) are connected to one another in a form-fitting manner.

4. Torch according to one of the preceding claims, **characterized in that** the at least one separating wall (22) is made from copper.

5. Torch according to one of the preceding claims, **characterized in that** the at least one separating wall (22) goes over at the end of the shell (21) that is facing the workpiece into a closure element (23), which is connected to the shell (21) in a fluid-tight manner.

6. Torch according to Claim 5, **characterized in that** the at least one separating wall (22) has in the region of the closure element (23) at least one clearance, through which the cooling channels (25, 26) are connected to one another, so that the liquid cooling medium can flow into the electrode holder (20) and in the direction of the closure element (23) through at least one cooling channel (25, 26) and away from the closure element (23) and out of the electrode holder (20) through at least one other cooling channel (25, 26).

7. Torch according to one of the preceding claims, **characterized in that** the at least one separating wall (22) is formed by a planar web or a single- or multi-start worm.

8. Torch according to one of the preceding claims, **characterized in that** the insulating layer (29) consists of a heat-resistant plastic or a ceramic.

9. Torch according to one of the preceding claims, **characterized in that** the electrode unit (32) is formed with at least two parts, an electrode of tungsten or a tungsten alloy that tapers conically in the direction of a workpiece being fixed in a force-fitting and/or integrally bonding and/or form-fitting manner in an electrode carrier of a metal with a thermal conductivity greater than 50 W/mK.

10. Torch according to one of the preceding claims, **characterized in that** the electrode unit (32) is detachably screwed to the electrode holder (20).

11. Torch according to one of the preceding claims, **characterized in that** the electrode unit (32) is detachably screwed directly to the closure element (23) of the electrode holder (20).

12. Torch according to one of the preceding claims, **characterized in that** the housing (10) is flat, its width being much less than a length, the length being the extent of the housing (10) in the direction of a welding track.

13. Torch according to one of the preceding claims, **characterized in that** the housing (10) has a bore, in which the electrode holder (20) is received with a loose fit.

14. Torch according to one of the preceding claims, **characterized in that** the housing (10) does not comprise any insulation, in particular outside insulation.

## Revendications

1. Chalumeau pour le soudage au tungstène et au gaz inerte, en particulier tête à fente étroite pour le soudage à fente étroite au tungstène et au gaz inerte, dans lequel, dans une boîte (10) en un métal, une unité (32) d'électrodes est maintenue au moyen d'un porte-électrodes (20) et il y a un dispositif de refroidissement pour le refroidissement de l'unité (32) d'électrodes, par lequel le fluide de refroidissement liquide peut entrer dans le porte-électrodes (20) et ressortir du porte-électrodes (20),
**caractérisé en ce que**
- le dispositif de refroidissement comprend au moins une cloison (22) conductrice de l'électricité à l'intérieur d'une enveloppe (21) du porte-électrodes (20) pour la constitution de conduits (25, 26) de refroidissement, dans lequel au moins la au moins une cloison (22) est reliée électriquement à l'unité (32) d'électrodes, dans lequel la transmission du courant au porte-électrodes (32) s'effectue soit exclusivement par la cloison (22), soit par l'enveloppe (21) et la cloison (22),
et
- une surface (28) extérieure du porte-électrodes (20) est pourvue d'une couche (29) isolante au moins dans la partie de la boîte (10) entourant le porte-électrodes (20).

2. Chalumeau suivant la revendication 1, **caractérisé en ce que** l'enveloppe (21) du porte-électrodes (20) est formée d'un cylindre en un métal, en particulier en cuivre ou en acier fin ou en un alliage.

3. Chalumeau suivant la revendication 1 ou 2, **caractérisé en ce que** l'enveloppe (21) et la au moins une cloison (22) du porte-électrodes (20) sont assemblées l'une à l'autre à complémentarité de forme.

4. Chalumeau suivant l'une des revendications précédentes, **caractérisé en ce que** la au moins une cloison (22) est en cuivre.

5. Chalumeau suivant l'une des revendications précédentes, **caractérisé en ce que** la au moins une cloison (22) se transforme à une extrémité tournée vers la pièce de l'enveloppe (21) en un élément (23) de fermeture, qui est relié d'une manière étanche au fluide à l'enveloppe (21).

6. Chalumeau suivant la revendication 5, **caractérisé en ce que** la au moins une cloison (22) a, dans la partie de l'élément (23) de fermeture, au moins un évidement par lequel les conduits (25, 26) de refroidissement communiquent entre eux de manière à ce que le fluide de refroidissement liquide puisse, par au moins un conduit (25, 26) de refroidissement, s'écouler dans le porte-électrodes (20) et dans la direction de l'élément (23) de fermeture et, par au moins un autre conduit (25, 26) de refroidissement, s'éloigner de l'élément (23) de fermeture et sortir du porte-électrodes (20).

7. Chalumeau suivant l'une des revendications précédentes, **caractérisé en ce que** la au moins une cloison (22) est formée par une entretoise plane ou par une vis à un pas ou à plusieurs pas.

8. Chalumeau suivant l'une des revendications précédentes, **caractérisé en ce que** la couche (29) isolante est en une matière plastique résistant à la chaleur ou en une céramique.

9. Chalumeau suivant l'une des revendications précédentes, **caractérisé en ce que** l'unité (32) d'électrodes est constituée d'au moins deux parties, dans lequel une électrode en tungstène ou en un alliage de tungstène, se rétrécissant coniquement dans la direction d'une pièce, est fixée à coopération de force et/ou à coopération de matière et/ou à complémentarité de forme dans un porte-électrodes en un métal ayant une conductibilité thermique plus grande que 50 W/mK.

10. Chalumeau suivant l'une des revendications précédentes, **caractérisé en ce que** l'unité (32) d'électrode est vissée de manière amovible avec le porte-électrodes (20).

11. Chalumeau suivant l'une des revendications précédentes, **caractérisé en ce que** l'unité (32) d'électrodes est vissée de manière amovible directement avec l'élément (23) de fermeture du porte-électrodes (20).

12. Chalumeau suivant l'une des revendications précédentes, **caractérisé en ce que** la boîte (10) est plate, dans lequel sa largeur est sensiblement plus petite qu'une longueur, dans lequel la longueur de l'étendue de la boîte (10) est dans la direction d'un chemin de soudure.

13. Chalumeau suivant l'une des revendications précédentes, **caractérisé en ce que** l'enveloppe (10) a un trou dans lequel le porte-électrodes (20) est reçu en ajustement avec jeu.

14. Chalumeau suivant l'une des revendications précédentes, **caractérisé en ce que** l'enveloppe (10) ne comprend pas d'isolant, en particulier n'a pas d'isolant extérieur.
